# EUROPEAN PATENT SPECIFICATION

(11) **EP 2 312 807 B1**
(45) Date of publication and mention of the grant of the patent: **14.11.2018**
(21) Application number: 09804442.3
(22) Date of filing: 30.07.2009
(51) Int. Cl.: H04L 29/06, H04N 21/232, H04N 21/2381, H04N 21/6437

(54) **METHOD AND SYSTEM FOR ENABLING ZERO-COPY TRANSMISSION OF STREAMING MEDIA DATA**
VERFAHREN UND SYSTEM ZUR ERSTELLUNG EINER NULL-KOPIE-ÜBERTRAGUNG VON STREAMING-MEDIADATEN
PROCÉDÉ ET DISPOSITIF D ENVOI ZÉRO-COPIE DE DONNÉES RELATIVES À UN MÉDIA DE LECTURE EN CONTINU

(30) Priority: 04.08.2008 CN 200810142292; 26.12.2008 CN 200810241596
(43) Date of publication of application: 20.04.2011
(73) Proprietor: ZTE Corporation, Shenzhen, Guangdong 518057 (CN)
(72) Inventor: WANG, Weiqiang, Shenzhen Guangdong 518057 (CN); ZHU, Hongjun, Shenzhen Guangdong 518057 (CN); CHENG, Jian, Shenzhen Guangdong 518057 (CN)
(74) Representative: Rekdal, Kristine
(86) International application number: PCT/CN2009/000852
(87) International publication number: WO 2010/015142

(56) References cited:
- CN-A- 101 063 963
- CN-A- 101 135 980
- CN-A- 101 340 574
- CN-A- 101 465 854
- US-A1- 2004 013 117
- US-A1- 2004 199 650
- US-A1- 2004 199 650
- US-A1- 2007 086 480
- KURMANN, CHRISTIAN ET AL.: 'Speculative Defragmentation - A Technique to Improve the Communication Software Efficiency for Gigabit Ethernet.' 9TH IEEE INTERNATIONAL SYMPOSIUM ON HIGH PERFORMANCE DISTRIBUTED COMPUTING., [Online] 04 August 2000, XP010511542 Retrieved from the Internet: <URL:http://www2.computer.org/portal/web/cs dl/doi/10.1109/HPDC.2000.868643> [retrieved on 2009-09-15]

## Description

### Technical Field

The present invention relates to a method and system for network communication in the field of computer applications, and more especially, to a method and system for enabling zero copy transmission of streaming media data based on the linux network protocol stack.

### Background of the Related Art

In the prior art, massive streaming media data should be transported from the disk to the network in the streaming media server applications based on the Linux operating system. When the streaming media data is being transported from the disk to the network, it needs to be transported for several times in different system spaces.

The transport process mainly comprises the following three parts: (1) read the streaming media data out the disk space and write it into the user data buffer; (2) package the streaming media data stored in the user data buffer into RTP (Real-time Transport Protocol) packets and store them in the user transmission buffer; (3) send the RTP packets stored in the user transmission buffer out with the UDP (User Datagram Protocol) network socket.

In the Linux operating system, the user process can read disk data through direct I/O interface system call, and the system call directly writes the disk data into the user buffer via the DMA (Direct Memory Access) mechanism; with the UDP network socket related system call interface, the RTP packets can be sent out, and the system call copies the RTP packets from the user space to the kernel space and correspondingly encapsulates the packets, and then maps the packets to the transmission buffer of the network card via the DMA mechanism, and finally the network card sends the RTP packets out.

In the method of the prior art, the user process can read streaming data out from disk with zero copy, however, the data copy is required when the streaming media data is packaged into RTP packets, moreover, the data should be copied from the user space to the kernel space when the RTP packets are sent.

Moreover, every time the user process sends a packet, it needs to use the system call for one time, and in each time, the system call should switch from the user state to the kernel state, and after the system call returns, it switches back from the kernel state to the user state. In the condition that the streaming media server is heavily loaded, massive data copying and context switching would be triggered, which extremely consumes system CPU resource and decreases the system processing ability.

It can be seen that the overhead in the streaming media packet transmission is mainly generated in data organization, data copy and data transmission at different levels such as the user process, operating system, and network card driving. How to effectively reduce the number of data copies and system calls, reduce the CPU usage, increase the system processing ability is very important to improve the performance of the streaming media server.

Therefore, the prior art should be improved and developed.

The document US 2004/199650 A1 discloses sending data over a generic network interface in such a way that the resources used by the host CPU for packetization is minimized, allowing more packets to be sent across the network than is currently possible using existing technologies, data is sent in a timely manner, minimizing jitter associated with real-time data delivery, especially for multimedia applications, CPU resource utilization is achieved by using a number of different techniques, such as zero-copy data movement where the data from a storage system is made available directly to the network driver without creating intermediate copies that consume CPU resources to do the copying.

The document US 2007/086480 A1 discloses a computer system includes a system memory, a processor and a peripheral, the peripheral includes a peripheral memory, a circuit, a first interface to receive a packet and a second interface that is adapted to communicate with the system memory, the peripheral memory is adapted to store a table that includes entries that identify different packet flows, the circuit is adapted to use the table to associate the packet with one of the packet flows and based on the association, interact with the second interface to selectively transfer a portion of the packet to the system memory for processing by the processor.

The document US 2004/013117 A1 discloses an apparatus and method for managing the receipt of communication traffic in the form of packets or other units, the apparatus includes a communication interface (e.g., a NIC, a TCA) coupled to one or more host computer systems, through Direct Memory Access (DMA) operations, the interface reassembles payloads of received packets into host buffers based on their sequence numbers, without buffering them in the interface, packet headers are separated from the payloads and passed to a host for protocol processing after the payload DMA is completed, host buffers may be of virtually any size, for each communication connection, state information is maintained on the interface, which may identify an upper level protocol so that an upper level protocol header is passed to the host as part of the packet header, not as part of the payload, protocol termination remains in the host.

### Content of the Invention

The purpose of the present invention is to provide a method and system for implementing zero copy transmission of streaming media data, and the method and system are based on the Linux network protocol stack, and in the condition that the original network protocol stack of the Linux system is not affected, the method and system reduce the CPU usage due to the data copy and system call as much as possible, thus improve the system processing ability.

In order to achieve the above-mentioned purpose, a method according to claim 1 and a system according to claim 3 are provided. Further improvements and embodiments are provided in the dependent claims.

Also provided is a method for implementing the zero copy transmission of streaming media data, and the method is based on the Linux network protocol stack, wherein, the method comprises the following steps of:
A. when a streaming media server receives a data request from a user equipment, it performing a system call of transmission data and reading the streaming media data from the disk space and writes it into the user data buffer;
B. packaging the streaming media data stored in the user data buffer into the real-time transport protocol packets; transmitting these real-time transport protocol data packets in the form of streaming media packets whose head and load are separated.

Furthermore, in the method, the step B also comprises:
B1. allocating a kernel buffer structure in the kernel space for each to-be-transmitted real-time transport protocol packet, and the structure comprises two parts: one part is the temporarily allocated kernel buffer including the head of the real-time transport protocol packet; the other part is the temporarily mapped user buffer including the load of the real-time transport protocol packet;
B2. using the scatter/gather function and the direct memory access function of the network card, mapping the two part buffers of the kernel buffer structure to the transmission buffer of the network card, and calling the transmission function of the network card driver module to implement zero copy transmission of the streaming media data.

Furthermore, in the method, when the streaming media service is required to process requests from a plurality of users, it needs to send one streaming media packet to each user with one system call.

Furthermore, in the method, the network protocol stack provides the following socket programming interfaces: "socket" which is used to create the socket, "close" which is used to close the socket, "sendmsg" which is used to implement the zero copy transmission of the streaming media data.

Also provided is a system for implementing zero copy transmission of streaming media data comprises the streaming media server, and the streaming media server is configured to implement the zero copy transmission of the streaming media data based on the Linux network protocol stack. Wherein, the streaming media server configures a kernel space between the hardware device and the user process, and configures a network protocol stack above the network card driver program in the kernel space; the kernel space allocates for real-time transport protocol packets formed by packaging the to-be-transmitted streaming media data the following buffers:
a temporarily allocated kernel buffer to include the head of the real-time transport protocol packets, and
a temporarily mapped user buffer to include the load of the real-time transport protocol packets;

The network protocol stack provides socket programming interfaces for the user process, and the socket programming interfaces comprise: "socket" used to create the socket, "close" used to close the socket, and "sendmsg" used to implement the zero copy transmission of the streaming media data; the network protocol stack is used to send the real-time transport protocol packets in the form of streaming media packets whose head and load are separated.

Furthermore, in the system, the streaming media server applies the batch transmission technology to send a plurality of packets in one system call of "sendmsg".

Compared with the network protocol stack in the Linux kernel in the prior art, the method and system for implementing the zero copy transmission of the streaming media data provided in the present invention implement the zero copy transmission of the streaming media data by sufficiently using the DMA and SG (Scatter/Gather) functions of the network card and implement the transmission of the streaming media packets whose head and load are separated, thus reduce one data copy operation in the process of RTP packaging the streaming media data.

### Brief Description of Drawings

FIG. 1 illustrates the process of using the network protocol stack realized in the present invention to perform zero copy transmission of the streaming media data;
FIG. 2 illustrates the structure of the system in accordance with the present invention.

### Preferred Embodiments of the Present Invention

In the following, the preferred embodiments of the present invention will be described in further detail with reference to the accompanying figures.

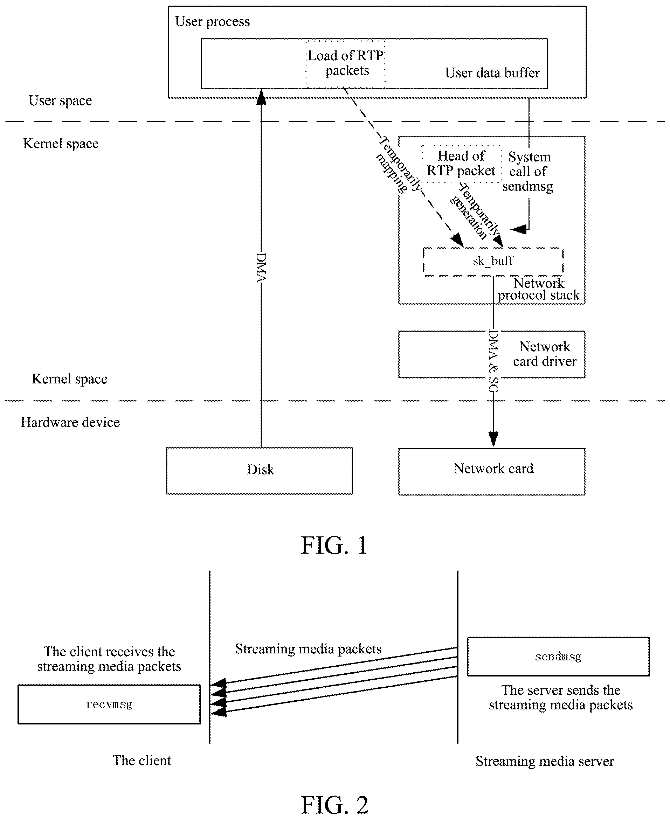

In the method for realizing zero copy transmission of the streaming media data based on the Linux network protocol stack in accordance with the present invention, the original Linux network protocol stack which is realized with the kernel module mechanism will be used, loading and unloading of the kernel module will not affect the original network protocol stack of the Linux kernel. The system for realizing zero copy transmission of the streaming media data in the present invention comprises a streaming media server, as shown in FIG. 2, the streaming media server is configured with a network card for communicating with the user equipment. Said network card supports the DMA and SG (Scatter/Gather) functions.

In said method and system of the present invention, the hardware devices of said streaming media server comprise a network card and a disk, as shown in FIG. 1, Linux kernel space is located between the hardware device and user process, the network protocol stack is configured above the network card driver program in the kernel space, and said network protocol stack provides a socket programming interfaces to the user process, and said socket programming interfaces mainly comprise system calls such as "socket", "close" and "sendmsg", wherein, "socket" is used to create the socket, "close" is used to close the socket and "sendmsg" is used to realize zero copy transmission of the streaming media data.

The hardware environment of the method and system in accordance with the present invention requires that the network card has the DMA and SG functions, and the software environment is the Linux kernel having proper network functions. In order to realize the function of zero copy transmission of the streaming media data, the method and system of the present invention create the DATALINK network protocol stack based on the socket type of AF_DATALINK on the basis of the original Linux kernel. The protocol stack provides the user process the AF_DATALINK types of socket programming interfaces including the system calls such as "socket", "close" and "sendmsg". Wherein, the system call of "socket" is used to create the socket, the system call of "close" is used to close the socket, and the system call of "sendmsg" is used to send the streaming media data in the form of RTP packet encapsulation with zero copy.

The conventional standard semantic of "sendmsg" in the prior art cannot be able to realize the function of the present invention, thus "sendmsg" should be redefined. In the following, the "sendmsg" in the method and system of the present invention is defined and explained:
ssize_t sendmsg(int socket, const struct msghdr *msg, int flags);

### Function:

zero copy transmission of the streaming media data is realized with socket.

### Input and output parameters:

socket, a socket of AF_DATALINK created using the system call of "socket";
msg→msg_name: temporarily unused.
msg→msg_namelen: temporarily unused.
msg→msg_iov: an input parameter, the pointer pointing to the array of struct iovec. Each struct iovec comprises the buffer address and length of the to-be-transmitted data.
msg→msg_iovlen: an input parameter to store the length of the array of struct iovec to which msg_iov points.
msg→msg_control: an input-output parameter to store the control information including the IP address, UDP port and RTP load type of each streaming media packet during the input; and to return the index and error code of the packets incorrectly transmitted.
msg→msg_controllen: an input parameter used to store the total length of the msg_control message.
msg→msg_flags: temporarily unused.
flags: temporarily unused.

### Returned value:

If the packets are not transmitted successfully, return -1 and set the error code errno.

If some or all packets are transmitted successfully, return the number of the successfully transmitted packets, the index of the packets which are not transmitted successfully and the corresponding error code via the output parameter.

The information of which the RTP packets consist is stored in the parameter of msg, and msg_iov stores the load information of the to-be-transmitted RTP packets comprising the address and length information of the user data buffer as load of RTP packets; msg_control stores the head information of the to-be-transmitted RTP packets comprising the IP address, port number, RTP load type used for generating the head of RTP packets.

As shown in FIG. 1, the method of the present invention allocates the kernel buffer structure sk buffer for each to-be-transmitted RTP packet in the kernel space during the system call of "sendmsg", and the data of this structure consists of two parts: one part is the temporarily allocated kernel buffer including the head of the streaming media RTP packet which is generated according to the head information included in msg_control; the other part is the temporarily mapped user buffer including the load of the RTP packet which is obtained according to the load information included in msg_iov. With the SG and DMA functions of the network card, these two buffers are mapped to the transmission buffer of the network card, and the transmission function of the network card driving module is called to complete the zero copy transmission of the streaming media data. The above-mentioned mapping process is known in the prior art and will not be described here.

When the streaming media server in the method and system of the present invention processes a single user request, the zero copy transmission of the streaming media data could be realized with socket of AF_DATALINK and one system call of "sendmsg".

When the streaming media server needs to process a plurality of user requests, besides of using the zero copy transmission of streaming media data similar to the case of the single user request, the system performance can be further optimized by reducing the number of system calls: this mainly owes to meaning redefinition for the parameter msg used for the system call of "sendmsg", its member msg→msg_iov points to a batch of packet buffers, and the member msg→iovlen denotes the number of the packet buffers. One system call could send a batch of streaming media packets, and in practical applications, one streaming media packet is sent to each user in one "sendmsg" to reduce the number of the system calls of "sendmsg", thus to optimize the system performance.

The method and system of the present invention sufficiently use the DMA and SG functions of the network card to realize zero copy transmission of the streaming media data. Compared with the conventional network protocol stack of the Linux kernel, the method and system of the present invention use the SG function of the network card to realize the transmission of the streaming media packets whose head and load are separated, thus reduce one data copy needed in the process of RTP packaging the streaming media data.

Meanwhile, with the DMA function of the network card, the network card driver module directly uses the user buffer to transmit the packets, thus reduce one data copy operation needed in the process of copying the streaming media data from user space to kernel space.

The method and system of the present invention apply the batch sending technology to realize the function of sending a batch of packets with one system call, thus avoid the case that one system call is needed to send a packet, reduce the overhead of system calls when sending a plurality of users the streaming media data. The implementation of said batch sending technology is known by those skilled in the field and will not be described here.

It should be noted that the above-mentioned network protocol stack is realized with software, and the implementation of system calls is known in that of existing software, whose specific procedure is familiar to those skilled in the art and not discussed in detail here.

Meanwhile, it should be noted that, the preferred embodiments of the present invention are described in detail, however, they should not be considered as limit of the protection scope of the present invention and the protection scope of the present invention is defined by the claims.

### Industrial Applicability

The method and system of the present invention fully use the DMA and SG functions of the network card to realize the zero copy transmission of the streaming media data. Compared with the conventional network protocol stack of the Linux kernel, the method and system of the present invention use the SG function of the network card to realize the transmission of the streaming media packets whose head and load are separated, thus reduce one data copy operation needed during the process of RTP packaging the streaming media data.

## Claims

1. A method for implementing zero copy transmission of streaming media data, the implementation of the method being based on a Linux network protocol stack, and the method comprising the following steps of:
A. when a streaming media server receives a data request from a user equipment, the streaming media server performing a system call of transmission data, reading the streaming media data from a disk space and writing the streaming media data into a user data buffer;
B. packaging the streaming media data stored in the user data buffer into real-time transport protocol packets; transmitting the real-time transport protocol data packets in a form of streaming media packets whose head and load are separated, wherein, said step B further comprises:
B1. allocating a kernel buffer structure in a kernel space for each to-be-transmitted real-time transport protocol packet, and the kernel buffer structure comprising:
a temporarily allocated kernel buffer including a head of said to-be-transmitted real-time transport protocol packet; and
a temporarily mapped user buffer including load of said to-be-transmitted real-time transport protocol packet;
B2. using a scatter/gather function and a direct memory access function of a network card, mapping the temporarily allocated kernel buffer and temporarily mapped user buffer of said kernel buffer structure to a transmission buffer of the network card, and calling a transmission function of a network card driver module to complete zero copy transmission of the streaming media data,
wherein, said network protocol stack provides the following socket programming interfaces:
"socket" which is used to create a socket, "close" which is used to close a socket, "sendmsg" which is used to implement the zero copy transmission of the streaming media data.

2. A method of claim 1, wherein, when the streaming media service is required to process requests from a plurality of users, the streaming media service transmitting one streaming media packet to each user sending the request with one system call.

3. A system for implementing zero copy transmission of streaming media data, said system comprising a streaming media server, and said streaming media server being configured to implement zero copy transmission of streaming media data based on a Linux network protocol stack, wherein
said streaming media server being configured to configure a kernel space between a hardware device thereof and a user process, and configures the network protocol stack above a network card driver program in the kernel space;
said kernel space allocates for real-time transport protocol packets formed by packaging to-be-transmitted streaming media data the following buffers:
a temporarily allocated kernel buffer to include a head of said real-time transport protocol packets, and
a temporarily mapped user buffer to include load of said real-time transport protocol packets;
said network protocol stack provides socket programming interfaces for the user process, and said socket programming interfaces comprise: "socket" used to create a socket, "close" used to close a socket, and "sendmsg" used to implement zero copy transmission of streaming media data; said network protocol stack is used to transmit the real-time transport protocol packets in a form of streaming media packets whose head and load are separated, wherein,
using a scatter/gather function and a direct memory access function of a network card, mapping the temporarily allocated kernel buffer and temporarily mapped user buffer to a transmission buffer of the network card, and calling a transmission function of a network card driver module to complete zero copy transmission of the streaming media data.

4. A system of claim 3, wherein, said streaming media server applies batch transmission technology to send a plurality of packets in one system call of "sendmsg".

## Patentansprüche

1. Verfahren zum Implementieren einer Nullkopien-Übertragung von Streaming-Mediendaten, wobei die Implementierung des Verfahrens auf einem Linux-Netzwerkprotokollstapel basiert und wobei das Verfahren die folgenden Schritte umfasst:
A. Wenn ein Streaming-Medienserver eine Datenanforderung von einem Benutzergerät empfängt, Durchführen eines Systemaufrufs von Übertragungsdaten, Lesen der Streaming-Mediendaten von einem Speicherplatz und Schreiben der Streaming-Mediendaten in einen Benutzerdatenpuffer durch den Streaming-Medienserver;
B. Verpacken der im Benutzerdatenpuffer gespeicherten Streaming-Mediendaten in Echtzeit-Transportprotokollpakete; Übertragen der Echtzeit-Transportprotokoll-Datenpakete in Form von Streaming-Medienpaketen, deren Kopf und Nutzlast getrennt sind, wobei der Schritt B ferner umfasst:
B1. Zuweisen einer Kernelpufferstruktur in einem Kernelraum für jedes zu übertragende Echtzeit-Transportprotokollpaket, wobei die Kernelpufferstruktur Folgendes umfasst:
einen temporär zugewiesenen Kernelpuffer mit einem Kopf des zu übertragenden Echtzeit-Transportprotokollpakets; und
einen temporär abgebildeten Benutzerpuffer mit einer Nutzlast des zu übertragenden Echtzeit-Transportprotokollpakets;
B2. Verwenden einer Scatter/Gather-Funktion und einer direkten Speicherzugriffsfunktion einer Netzwerkkarte, Abbilden des temporär zugewiesenen Kernelpuffers und des temporär abgebildeten Benutzerpuffers der Kernelpufferstruktur auf einen Übertragungspuffer der Netzwerkkarte und Aufrufen einer Übertragungsfunktion eines Netzwerkkartentreibermoduls, um die Nullkopien-Übertragung der Streaming-Mediendaten abzuschließen,
wobei der Netzwerkprotokollstapel die folgenden Socket-Programmierschnittstellen bereitstellt:
"socket", mit dem ein Socket erstellt wird, "close", mit dem ein Socket geschlossen wird, "sendmsg", mit dem die Nullkopien-Übertragung der Streaming-Mediendaten implementiert wird.

2. Verfahren nach Anspruch 1, wobei, wenn der Streaming-Mediendienst benötigt wird, um Anforderungen von einer Vielzahl von Benutzern zu verarbeiten, der Streaming-Mediendienst ein Streaming-Medienpaket an jeden die Anforderung sendenden Benutzer mit einem Systemaufruf überträgt.

3. System zum Implementieren einer Nullkopien-Übertragung von Streaming-Mediendaten, wobei das System einen Streaming-Medienserver umfasst und der Streaming-Medienserver dazu ausgelegt ist, eine Nullkopien-Übertragung von Streaming-Mediendaten basierend auf einem Linux-Netzwerkprotokollstapel zu implementieren, wobei
der Streaming-Medienserver dazu ausgelegt ist, einen Kernelraum zwischen einer Hardwarevorrichtung davon und einem Benutzerprozess zu konfigurieren, und den Netzwerkprotokollstapel über einem Netzwerkkartentreiberprogramm in dem Kernelraum konfiguriert;
der Kernelraum für Echtzeit-Transportprotokollpakete, die durch das Verpacken der zu übertragenden Streaming-Mediendaten gebildet werden, die folgenden Puffer zuweist:
einen temporär zugewiesenen Kernelpuffer, der einen Kopf der Echtzeit-Transportprotokollpakete enthält, und
einen temporär abgebildeten Benutzerpuffer, der die Nutzlast der Echtzeit-Transportprotokollpakete enthält;
der Netzwerkprotokollstapel Socket-Programmierschnittstellen für den Benutzerprozess bereitstellt und die Socket-Programmierschnittstellen umfassen: "socket" zum Erzeugen eines Sockets, "close" zum Schließen eines Sockets und "sendmsg" zum Implementieren einer Nullkopien-Übertragung von Streaming-Mediendaten; wobei der Netzwerkprotokollstapel zum Übertragen der Echtzeit-Transportprotokollpakete in Form von Streaming-Medienpaketen verwendet wird, deren Kopf und Nutzlast getrennt sind, wobei
unter Verwendung einer Scatter/Gather-Funktion und einer direkten Speicherzugriffsfunktion einer Netzwerkkarte der temporär zugeordnete Kernelpuffer und der temporär abgebildete Benutzerpuffer auf einen Übertragungspuffer der Netzwerkkarte abgebildet werden und eine Übertragungsfunktion eines Netzwerkkartentreibermoduls aufgerufen wird, um die Nullkopien-Übertragung der Streaming-Mediendaten abzuschließen.

4. System nach Anspruch 3, wobei der Streaming-Medienserver eine Stapelübertragungstechnologie anwendet, um eine Vielzahl von Paketen in einem Systemaufruf von "sendmsg" zu senden.

## Revendications

1. Procédé de mise en oeuvre d'une transmission zéro copie de données multimédia en flux continu, la mise en oeuvre du procédé étant basée sur une pile de protocoles de réseau Linux, et le procédé comprenant les étapes suivantes :
A. lorsqu'un serveur multimédia en flux continu reçoit une demande de données provenant d'un équipement utilisateur, le serveur multimédia en flux continu exécute un appel de système de données de transmission, lit les données multimédia en flux continu à partir d'un espace disque et écrit les données multimédia en flux continu dans un tampon de données utilisateur ;
B. mettre en paquets les données multimédia en flux continu stockées dans le tampon de données utilisateur dans des paquets de protocole de transport en temps réel ; transmettre les paquets de données de protocole de transport en temps réel sous une forme de paquets multimédia en flux continu dont l'en-tête et la charge sont séparés, ladite étape B comprenant en outre les étapes suivantes :
B1. allouer une structure du tampon du noyau dans un espace de noyau pour chaque paquet de protocole de transport en temps réel à transmettre, et la structure du tampon du noyau comprenant :
un tampon du noyau temporairement alloué incluant un en-tête dudit paquet de protocole de transport en temps réel à transmettre ; et
un tampon utilisateur mis temporairement en correspondance incluant une charge dudit paquet de protocole de transport en temps réel à transmettre ;
B2. utiliser une fonction de ventilation/regroupement et une fonction d'accès direct à la mémoire d'une carte réseau, mettre en correspondance le tampon du noyau temporairement alloué et le tampon utilisateur mis temporairement en correspondance de ladite structure du tampon du noyau avec un tampon d'émission de la carte réseau, et appeler une fonction de transmission d'un module de pilote de carte réseau pour compléter une transmission zéro copie des données multimédia en flux continu,
dans lequel, ladite pile de protocoles de réseau fournit les interfaces de programmation de connecteur suivantes :
« socket » qui est utilisé pour créer un connecteur, « close » qui est utilisé pour fermer un connecteur, « sendmsg » qui est utilisé pour mettre en oeuvre la transmission zéro copie des données multimédia en flux continu.

2. Procédé selon la revendication 1, dans lequel, lorsque le service multimédia en flux continu est requis pour traiter des demandes provenant d'une pluralité d'utilisateurs, le service multimédia en flux continu transmet un paquet multimédia en flux continu à chaque utilisateur envoyant la demande avec un appel de système.

3. Système de mise en oeuvre d'une transmission zéro copie de données multimédia en flux continu, ledit système comprenant un serveur multimédia en flux continu, et ledit serveur multimédia en flux continu étant conçu pour mettre en oeuvre une transmission zéro copie de données multimédia en flux continu sur la base d'une pile de protocoles de réseau Linux, dans lequel
ledit serveur multimédia en flux continu est conçu pour configurer un espace de noyau entre un dispositif matériel de celui-ci et un procédé utilisateur, et configure la pile de protocoles de réseau au-dessus d'un programme de pilote de carte réseau dans l'espace de noyau ;
ledit espace de noyau alloue, pour des paquets de protocole de transport en temps réel formés en mettant en paquets des données multimédia en flux continu à transmettre, les tampons suivants :
un tampon du noyau temporairement alloué pour inclure un en-tête desdits paquets de protocole de transport en temps réel, et
un tampon utilisateur mis temporairement en correspondance pour inclure une charge desdits paquets de protocole de transport en temps réel ;
ladite pile de protocoles de réseau fournit des interfaces de programmation de connecteur pour le procédé utilisateur, et lesdites interfaces de programmation de connecteur comprennent : « socket » utilisé pour créer un connecteur, « close » utilisé pour fermer un connecteur, « sendmsg » utilisé pour mettre en oeuvre une transmission zéro copie de données multimédia en flux continu ; ladite pile de protocoles de réseau est utilisée pour transmettre les paquets de protocole de transport en temps réel sous une forme de paquets multimédia en flux continu dont l'en-tête et la charge sont séparés, dans lequel,
utiliser une fonction de ventilation/regroupement et une fonction d'accès direct à la mémoire d'une carte réseau, mettre en correspondance le tampon du noyau temporairement alloué et le tampon utilisateur mis temporairement en correspondance avec un tampon d'émission de la carte réseau, et appeler une fonction de transmission d'un module de pilote de carte réseau pour compléter une transmission zéro copie des données multimédia en flux continu.

4. Système selon la revendication 3, dans lequel, ledit serveur multimédia en flux continu applique une technologie de transmission par lots pour envoyer une pluralité de paquets dans un appel de système de « sendmsg ».
